## Europäisches Patentamt
## European Patent Office
## Office européen des brevets

(19)

(11) Veröffentlichungsnummer: **0 065 592**

A1

(12) # EUROPÄISCHE PATENTANMELDUNG

(21) Anmeldenummer: 81104082.3

(22) Anmeldetag: 27.05.81

(51) Int. Cl.³: **B 62 D 55/10**
**B 60 G 17/08**

(43) Veröffentlichungstag der Anmeldung:
01.12.82 Patentblatt 82/48

(84) Benannte Vertragsstaaten:
AT BE CH DE FR GB IT LI LU NL SE

(71) Anmelder: Roland Fahrzeugplanung und -Vertrieb GmbH
Grubmühlerfeldstrasse 54
D-8035 Gauting 1(DE)

(72) Erfinder: Marschall, Hermann
Sonnenzicht 2
D-8952 Marktoberdorf(DE)

(72) Erfinder: Völker, Adalbert, Dr. Ing.
Wilhelmstrasse 5
D-6660 Zweibrücken(DE)

(54) **Stabilisierungsanordnung für einen von einem Laufwerk getragenen Fahrzeugaufbau, insbesondere eines Kettenfahrzeuges.**

(57) Eine Stabilisierungsanordnung für einen von einem Laufwerk getragenen Fahrzeugaufbau, insbesondere für einen von einem Kettenlaufwerk getragenen Aufbau eines Kettenfahrzeuges mit den Laufrädern des Laufwerks zugeordneten stoßdämpfenden Mitteln, über die der Fahrzeugaufbau auf den Laufrädern des Laufwerks abgestützt ist, bei der

- im Bereich der Ecken der Fahrzeugaufbau 32 über eine doppelt wirkende Hydraulikeinrichtung 1, 2, die in einem geschlossenen Gehäuse 3, 4 durch ein im Gehäuseinnern in Abhängigkeit von der Laufräderbewegung beim Ein- und Ausfedern verstellbares Stellglied 5, 6, 26 bzw. 27 voneinander getrennte, mit Arbeitsmedium gefüllte Arbeitsräume 7, 8, 11, 12 und 9, 10, 13, 14 aufweist, auf den jeweils zugeordneten Laufrädern 15, 16 abgestützt ist,
- sowohl die bei der Ausfederung volumenmäßig sich verringernden Arbeitsräume 9, 10 und 13, 14 wenigstens zweier Hydraulikeinrichtungen 1, 2 über einen die Ausfederungsdämpfung regelnden Steuerblock 46
- als auch die bei der Einfederung volumenmäßig sich verringernden Arbeitsräume 7, 8 und 11, 12 wenigstens zweier Hydraulikeinrichtungen 1, 2 über einen die Einfederungsdämpfung regelnden Steuerblock 47

- angeschlossen sind und ein geschlossenes Hydrauliksystem bilden,
- wobei bei der Einfederung bis zu einer bestimmten Durchflußmenge an Arbeitsmedium durch den die Einfederungsdämpfung regelnden Steuerblock 47 die geländeprofilabhängige Einfederungsdämpfung des die Ausfederung regelnden Steuerblocks 46 maßgebend für die Ruhigstellung (Lageregelung) des Fahrzeugaufbaus 32 ist und oberhalb einer bestimmten Durchflußmenge durch den die Einfederungsdämpfung regelnden Steuerblock 47 ein Druckgefälle zwischen den Arbeitsräumen 7, 8 und 11, 12, deren Volumen sich bei der Einfederung verringert, und den Arbeitsräumen 9, 10 und 13, 14, deren Volumen beim Ausfedern sich verringert, aufrechterhalten bleibt.

./...

EP 0 065 592 A1

FIG.1

0065592

- 1 -

**Stabilisierungsanordnung für einen von einem Laufwerk getragenen Fahrzeugaufbau, insbesondere eines Kettenfahrzeuges**

Die Erfindung betrifft eine Stabilisierungsanordnung für einen von einem Laufwerk getragenen Fahrzeugaufbau, insbesondere eines Kettenfahrzeuges, mit den Laufrädern des Laufwerks zugeordneten stoßdämpfenden Mitteln, über die der Fahrzeugaufbau auf den Laufrädern des Laufwerks abgestützt ist.

Bei Geländefahrzeugen oder Kettenfahrzeugen, insbesondere bei Panzerfahrzeugen, übertragen sich Geländeunebenheiten, insbesondere im schwersten Gelände, auf den Fahrzeugaufbau so, daß aufgrund der hieraus resultierenden Bewegungen des Fahrzeugaufbaus, z.B. ein genaues Schießen aus der Fahrt, mit Schwierigkeiten verbunden ist. Auch zeigt sich beim Abbremsen und Beschleunigen des Fahrzeugs ein Brems- und Beschleunigungsnicken des Fahrzeugaufbaus, insbesondere Wannenaufbaus, und außerdem müssen von den Laufrädern kurzzeitige hohe Kräfte aufgenommen werden, insbesondere bei schnellem Fahren durch große Mulden mit steilem Hanganstieg oder bei einem Sprung von einer Schanze. Außerdem ergeben sich Gewichtsprobleme durch einseitige Lagerung von Waffen oder Zusatzausrüstungsgegenständen.

E 119

Aufgabe der Erfindung ist es daher, eine Stabilisierungsanordnung für einen von einem Laufwerk getragenen Fahrzeugaufbau, insbesondere eines Kettenfahrzeuges, bzw. insbesondere eines mit einer Waffe versehenen Panzerfahrzeuges zu schaffen, bei dem auch unter schwierigsten Geländebedingungen eine Vorstabilisierung sowohl beim Fahren im Gelände als auch eine Verbesserung der statischen Lage trotz unsymmetrischer Schwerpunktlagen in Längs- und Querrichtung für den Fahrzeug- bzw. Wannenaufbau erzielt werden.

Diese Aufgabe wird bei der eingangs genannten Stabilisierungsanordnung erfindungsgemäß dadurch gelöst, daß im Bereich der Ecken der Fahrzeugaufbau über eine doppelt wirkende Hydraulikeinrichtung, die in einem geschlossenen Gehäuse durch ein im Gehäuseinnern in Abhängigkeit von der Laufräderbewegung beim Ein- und Ausfedern verstellbares Stellglied voneinander getrennte mit Arbeitsmedium gefüllte Arbeitsräume aufweist, auf den jeweils zugeordneten Laufrädern abgestützt ist, sowohl die bei der Ausfederung volumenmäßig sich verringernden Arbeitsräume wenigstens zweier Hydraulikeinrichtungen über einen die Ausfederungsdämpfung regelnden Steuerblock als auch die bei der Einfederung volumenmäßig sich verringernden Arbeitsräume wenigstens zweier Hydraulikeinrichtungen über einen die Einfederungsdämpfung regelnden Steuerblock angeschlossen sind und ein geschlossenes Hydrauliksystem bilden, wobei bei der Einfederung bis zu einer bestimmten Durchflußmenge an Arbeitsmedium durch den die Einfederungsdämpfung regelnden Steuerblock die geländeprofilabhängige Einfederungsdämpfung des die Ausfederung regelnden Steuerblocks maßgebend für die Ruhigstellung des Fahrzeugaufbaus ist und oberhalb einer bestimmten Durchflußmenge durch den die Einfederungsdämpfung regelnden Steuerblock ein Druckgefälle zwischen den Arbeitsräumen, deren Volumen sich bei der Einfederung verringert, und den Arbeitsräumen, deren Volumen beim Ausfedern sich verringert, aufrechterhalten bleibt.

E 119

Weitere Vorteile der Erfindung sind darin zu sehen, daß das Hydrauliksystem mit kurzen Rohrleitungen und geringen Strömungsverlusten arbeiten kann. Es lassen sich starre Rohrleitungen verwenden, so daß teure und störende Elastizität bewirkende Schläuche vermieden werden. Außerdem sind Schwenkverschraubungen und Rohrbögen nicht notwendig. Es ist eine einfache Montage der Stabilisierungsanordnung und eine schwingungssichere Verlegung, bei der keine Wannendurchführungen benötigt werden, möglich. Außerdem läßt sich die gesamte Stabilisierungsanordnung völlig unter Panzerschutz montieren. Der Druckspeicher und die Steuerblöcke zur Regelung der Ein- und Ausfederungsdämpfung können so dimensioniert werden, daß sie jeweils zwischen zwei Hydraulikdämpfungseinrichtungen, insbesondere Drehflügelzylindern, angeordnet werden können. Ferner können Fahrzeuge, die bereits serienmäßig mit Dämpfung in Rotationsbauart ausgerüstet sind, einfach durch die Drehflügelzylinder nachgerüstet werden.

Ferner lassen sich bei einer Ausführungsform, bei der die Hydraulikeinrichtungen als Kolbenstangenhydraulikzylinders ausgebildet sind, ohne jegliche Elektronik oder Fremdenergie allein aufgrund des Arbeitsmediums für die Steuerblöcke Signale bilden, die die Lage der Wanne über einem mittleren Untergrundniveau, und zwar an jeder Fahrzeugecke getrennt sowie Wannennick- und Hubschwingungen nach Intensität und zeitlichem Verlauf der Summeneinfederung an jeder Fahrzeugecke gewinnen. Diese Signale wirken unmittelbar in den Steuerblöcken und damit praktisch trägheitslos und führen dann zu der gewünschten Ein- bzw. Ausfederungsdämpfung. Die Einfederungsdämpfung wird dabei völlig getrennt von der Ausfederungsdämpfung geregelt. Dies geschieht über je zwei Kennlinienmodule pro Steuerblock, die das Verhalten der gewünschten Dämpfung bestimmen und kontinuierlich und annähernd trägheitslos nachregeln.

E 80

Hierzu kann die gemeinsame Leitung für die kolbenseitigen Zylinderräume im die Einfederungsdämpfung regelnden Steuerblock über ein Stromregelventil, dem ein Drosselventil und ein Schutzventil parallel geschaltet ist, zum Hochdruckspeicher geführt sein. Ferner kann die gemeinsame Leitung für die auf der Stangenseite gebildeten Ringräume vom Hochdruckspeicher im die Ausfederungsdämpfung regelnden Steuerblock über ein Stromregelventil, dessen Durchflußmenge reziprok zum Speicherdruck gesteuert ist, geführt sein.

Zur Ableitung der anfallenden Dämpfungswärme, die im wesentlichen in den Steuerblöcken entsteht, können diese über eine gut wärmeleitende Kontaktfläche am Wannenaufbau, insbesondere an einer Wannenseitenwand, befestigt sein.

Bei der Erfindung ergibt sich eine situationsbezogene hydromechanische Selbstregelung jedes einzelnen Vorstabilisierungs-Systems an jeweils allen vier Fahrzeugaufbaueckpunkten, deren gegenseitige mechanische Koppelung über die dynamischen Fahrzeugaufbaubewegungen erfolgt. Ohne zusätzlichen Meß- und Regelaufwand wird auf diese Weise eine stetige dynamische Echtzeiterfassung aller sechs Freiheitsgrade des Fahrzeugs über einem gemittelten Geländeprofil zugelassen. Darüber hinaus gehen alle dynamischen Laufwerksbewegungen und deren Kennungen, wie z.B. Bandagencharakteristik, Kettengewicht, Fliehkräfte und dgl. auotmatisch ein. Zudem ist eine optimale Anpassung an jedes Kettenlaufwerk ohne besonderen Rechen- und Prüfstandaufwand möglich.

Beim Ausfall der Steuerblöcke bleibt die Federung in Funktion. Zudem ist es möglich, anstelle der herkömmlichen Stoßdämpfer an den entsprechenden Laufrädern jeweils die Kolbenstangenhydraulikzylinder bzw. Drehflügelzylinder mit entsprechender Abmessung und Anlenkung zu installieren.

E 119

Durch die Art der hydraulischen Koppelung von zwei oder drei oder mehr Laufrädern ist es möglich, den relativ hochfrequenten Bewegungsanteil der einzelnen Laufräder (bis ca. 100 Hz) beim Überfahren kleinerer bis mittlerer Hindernisse über den Ölstrom bzw. das Arbeitsmedium ungedämpft zu subtrahieren und nur den Bewegungsanteil rein hydraulisch herauszufiltern, der der momentanen Fahrzeugaufbaubewegung über dem mittleren Untergrundniveau entspricht.

Die Erfindung bringt daher den Vorteil einer guten Vorstabilisierung auch bei schwersten Geländebedingungen, so daß ein genaues Schießen auch aus der Fahrt und ein Unterbinden des Brems- und Beschleunigungsnickens erzielt wird. Bei Sprüngen von Schanzen und bei schnellem Fahren durch große Mulden mit steilem Hanganstieg läßt sich durch das Stabilisierungssystem der Erfindung ohne Mehrbelastung der Bauteile auch eine kurzzeitige Erhöhung der Arbeitsaufnahme um 50 - 100 % erzielen. Ohne Änderung des bestehenden Laufwerks kann auch das Gewicht des Kettenfahrzeuges bis zu ca. 20 % erhöht werden. Unsymmetrische Schwerpunktlagen in Längs- und Querrichtung können ausgeglichen werden.

Anhand der beiliegenden Figuren, die ein Ausführungsbeispiel zeigen, soll die Erfindung noch näher erläutert werden. Es zeigen:

Fig. 1          schematisch den Aufbau einer Stabilisierungsanordnung als ein Ausführungsbeispiel der Erfindung;

Fig. 2A         einen teilweisen Längsschnitt und einen Querschnitt
und 2B          durch eine Hydraulikdämpfungseinrichtung, die als Drehflügelzylinder mit darin angeodnetem Drehflügel ausgebildet ist;

E 119

Fig. 3 . einen Längsschnitt durch eine weitere Ausführungsform eines Drehflügelzylinders mit darin befindlichem
Drehflügel;

Fig. 4A einen Drehflügelteil, der dem Mantel des Drehflügel-
und 4B zylinders gegenüberliegt und

Fig. 5 ein weiteres Ausführungsbeispiel .

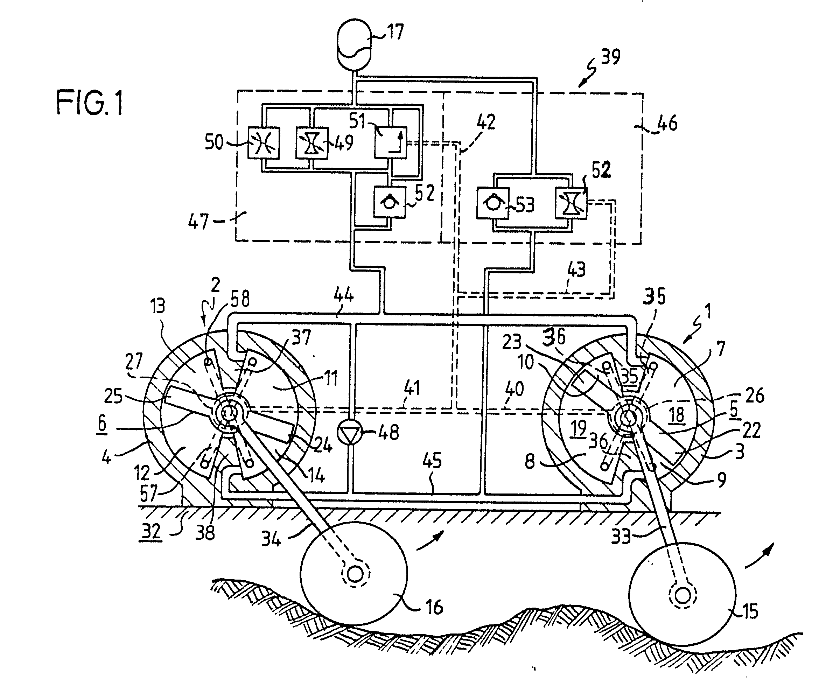

Beim dargestellten Ausführungsbeispiel der Fig. 1 sind zwei Hydraulikdämpfungseinrichtungen 1 und 2, die als Drehflügelhydraulikeinheiten
ausgebildet sind, über geschlossene Gehäuse 3 und 4 am Fahrzeugaufbau 32, insbesondere Wannenaufbau, befestigt. Die Drehflügelhydraulikeinheiten besitzen in den Gehäusen 3 und 4 Drehflügelzylinder, in
denen ein Drehflügel 5 bzw. 6 angeordnet ist. Jeder Drehflügel 5
bzw. 6 ist entweder mit einem Schwingarm 33 bzw. 34 einer Laufrolle 15 bzw. 16 drehfest oder über mechanische Übertragungselemente verbunden. Die Drehflügel 5 und 6 werden daher beim Ein-
und Ausfedern der Laufrollen im Drehflügelzylinder durch die Schwenkbewegungen der Schwingarme 33 und 34 gedreht.

Das Innere des Drehflügelzylinders wird durch Zwischenwände 35
und 36 bzw. 37 und 38, welche sich radial in das Zylinderinnere
vom Mantel weg erstrecken und in der Zylindermitte für die Lagerung des Drehflügels 5 bzw. 6 einen entsprechenden Raum freilassen,
in zwei Hälften 18 und 19 bzw. 20 und 21 geteilt. Jeder Drehflügel
5 bzw. 6 besitzt zwei Flügel 22 und 23 bzw. 24 und 25, die ihrerseits jede Drehflügelzylinderhälfte in zwei Arbeitsraumhälften unterteilt. Die Drehflügelzylinderhälfte 18 im Gehäuse 3 wird in eine Arbeitsraumhälfte 7 und eine Arbeitsraumhälfte 9 durch den Flügel 22 unterteilt. Die Drehflügelzylinderhälfte 19 wird durch den Flügel 23 in
eine Arbeitsraumhälfte 8 und eine Arbeitsraumhälfte 10 unterteilt.

E 119

Die Arbeitsraumhälften 7 und 8 in den beiden Drehflügelzylinderhälften im Gehäuse 3 sind über eine Leitung 35 miteinander verbunden
und bilden einen Arbeitsraum, dessen Volumen beim Einfedern der
Laufrolle 15 bzw. des Schwingarms 32 beim entsprechenden Verschwenken des Drehflügels 5 sich verringert und beim Ausfedern
der Laufrolle 15 bzw. des Schwingarmes 33 sich vergrößert. Ferner
sind die beiden Arbeitsraumhälften 9 und 10 im Gehäuse 3 über eine
Leitung 36 miteinander verbunden und bilden einen Arbeitsraum, dessen Volumen beim Einfedern der Laufrolle 15 bzw. des Schwingarmes 33 aufgrund der Verschwenkung des Drehflügels 5 sich vergrößert und beim Ausfedern sich verringert.

Die gleichen Verhältnisse ergeben sich bei der Drehflügelhydraulikeinrichtung im Gehäuse 4. In diesem Gehäuse wird die Drehflügelzylinderhälfte 20 durch den Flügel 24 in zwei Arbeitsraumhälften 11
und 14 unterteilt. Ferner wird durch den Flügel 25 die Drehflügelzylinderhälfte 21 in zwei Arbeitsraumhälften 12 und 13 unterteilt.
Die beiden Arbeitsraumhälften 11 und 12 bilden einen Arbeitsraum,
dessen Volumen beim Einfedern der Laufrolle 16 bzw. des Schwingarmes 34 sich verringert und beim Ausfedern sich vergrößert. Eine
Verbindungsleitung der beiden Arbeitsraumhälften 11 und 12 ist mit
37 bezeichnet. Außerdem sind die beiden Arbeitsraumhälften 13 und
14 über eine Verbindungsleitung 38 miteinander verbunden und bilden
einen Arbeitsraum, dessen Volumen beim Einfedern der Laufrolle 16
bzw. des Schwingarmes 34 sich vergrößert und beim Ausfedern sich
verringert.

In der Achse eines jeden Drehflügelzylinders ist der Drehflügel 5
bzw. 6 gelagert, wobei ein zentraler Durchgang zwischen den nach
innen ragenden Trennwänden 35 und 36 bzw. 37 und 38 vorgesehen
ist. Ferner können in diesem Bereich Drehwinkelgeber 26 und 27
vorgesehen sein, die in Abhängigkeit von der Winkelstellung des

E 119

Drehflügels 5 bzw. 6 Signale an einen noch näher zu beschreibenden Ventilblock 39 mit Steuer- und Drosselventilen weitergeben.
Die Drehwinkelgeber können hydraulisch, elektrisch oder mechanisch
ausgebildet sein. Die Signale der Drehwinkelgeber 26 und 27 werden
an den Ventilblock 39 über Leitungen 40, 41, 42 und 43 weitergegeben.

Bei einer bevorzugten Ausführungsform sind die Drehflügel 5 bzw. 6
gegenüber den Innenwandungen (Mantel, Stirnflächen) des Drehflügelzylinders durch gleitende Dichtungen abgedichtet. Es ist jedoch auch
möglich, einen Anteil des Drosselvorgangs im Drehzylinder stattfinden
zu lassen, wobei die Strömung des Arbeitsmediums, beispielsweise
der Hydraulikflüssigkeit, gezielt gedrosselt wird.

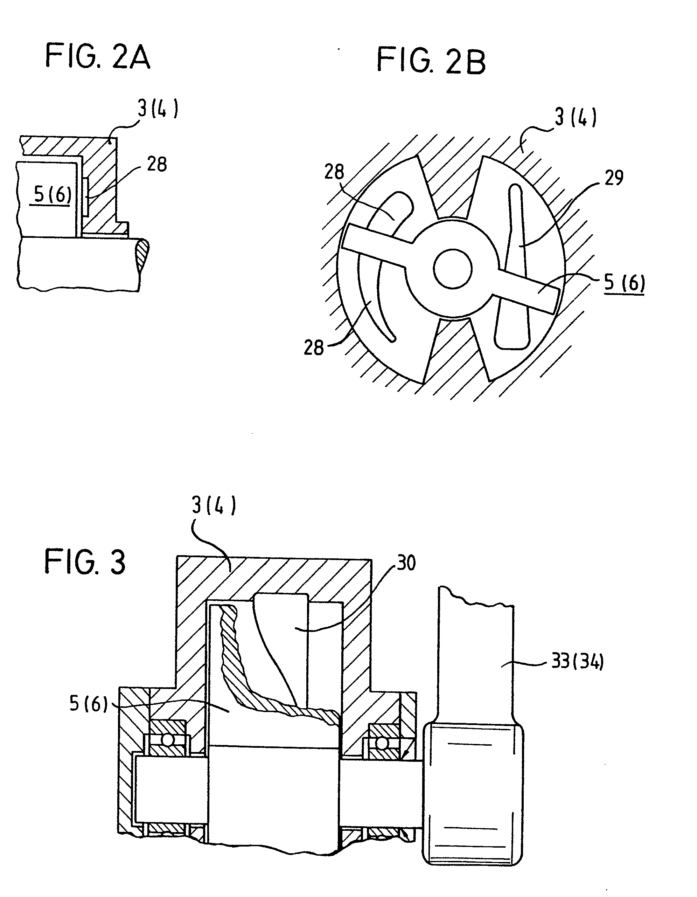

Zur Unterstützung der Wirkung des noch näher zu beschreibenden
Ventilblocks 39 kann durch die Ausgestaltung des Drehflügelzylinders
bzw. des in ihm enthaltenen Drehflügels 5 bzw. 6 eine drehwinkelabhängige Drosselwirkung auf die Hydraulikflüssigkeit beim Verstellen des Drehflügels während des Ein- und Ausfederns ausgeübt werden. Wie die Figuren 2A und 2B zeigen, können hierzu in einer
oder beiden Stirnflächen des Drehflügelzylinders kanalartige Vertiefungen 28 und 29 vorgesehen sein, deren Querschnitt sich mit dem
Drehwinkel des Drehflügels 5 bzw. 6 ändert. Auch ist es möglich,
wie in Fig. 3 dargestellt ist, im Mantel des Drehflügelzylinders
eine kanalartige Vertiefung 30 vorzusehen, deren Querschnitt sich
ebenfalls mit dem Drehwinkel des Drehflügels 5 bzw. 6 ändert.

Es ist jedoch auch möglich, einen radialen Spalt zwischen dem
Drehflügel 5 bzw. 6 und dem Zylindermantel des Drehflügelzylinders, z.B. durch unrunde Ausbildung des Zylindermantels vorzusehen, der sich in Abhängigkeit vom Drehwinkel des Drehflügels
5 bzw. 6 ändert. Ferner ist es möglich, einen über den Drehwinkel

E 119

veränderlichen axialen Spalt zwischen dem Drehflügel 5 bzw. 6 und den Stirnflächen des Drehflügelzylinders, z.B. durch unebene Zylinderböden, herzustellen.

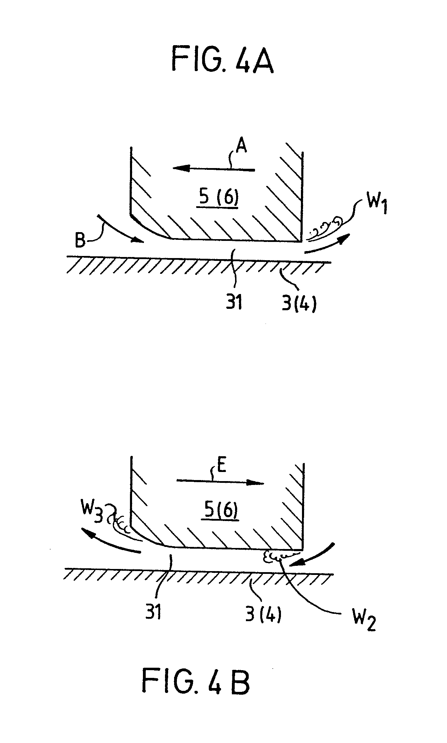

Wie aus der Fig. 4A und 4B zu ersehen ist, läßt sich zwischen dem Innenmantel des Drehflügelzylinders und der gegenüberliegenden Kante des Drehflügels 5 bzw. 6 ein Drosselspalt 31 erzielen, der eine drehrichtungsabhängige Drosselwirkung ausübt. Bewegt sich der Drehflügel 5 bzw. 6, wie in der Fig. 4A gezeigt, in Richtung des Pfeiles A, beispielsweise in Ausfederrichtung, wird in Bewegungsrichtung ein Überdruck erzeugt. Die Einströmpartie des Drosselspaltes 31 ist dabei strömungsgünstig ausgebildet und bewirkt eine beschleunigte Strömung, welche durch den Pfeil B dargestellt ist. Am Auslauf bewirkt die s charfe Kante am Drehflügel 5 bzw. 6 einen Strömungsabriß und damit eine Wirbelbildung W. Bei Strömung in Gegenrichtung, wie sie in der Fig. 4B dargestellt ist, bewegt sich der Drehflügel 5 bzw. 6, z.B. in Einfederrichtung, die durch den Pfeil E dargestellt ist, und es wird in dieser Bewegungsrichtung die Strömung beim Einlauf in den Drosselspalt 31 stark eingeschnürt, so daß ein Wirbelgebiet $W_2$ entsteht und am Auslauf des Drosselspaltes 31 ein Auslauf mit ungünstig verzögerter Strömung unter Bildung ebenfalls eines Wirbelgebietes $W_3$ mit wanderndem Ablösepunkt. Die Drosselwirkung bei der Bewegungsrichtung der Fig. 4B ist daher größer als bei der Bewegungsrichtung in der Fig. 4A. Es ist jedoch möglich, auch umgekehrte Drosselwirkungen hervorzurufen, so daß in der Ausfederrichtung eine größere Drosselwirkung erzielt wird als in der Einfederrichtung.

Wie des weiteren aus der Fig. 1 zu ersehen ist, ist zwischen den beiden Drehflügelhydraulikeinrichtungen 1 und 2 der Ventilblock angeorndet, welcher die Ausfederungsdämpfung und die Einfederungsdämpfung zusammen mit dem Druckspeicher 17 regelt. Hierzu sind

E 119

die Arbeitsräume 7 und 8 sowie 11 und 12 über eine gemeinsame Leitung 44 an den Ventilblock 39 angeschlossen. Ferner sind auch die Arbeitsräume 9, 10 und 13, 14 über eine gemeinsame Leitung 45 an den Ventilblock 39 angeschlossen. Die Funktionsweise und der Aufbau des Ventilblockes 39 sind im folgenden noch näher erläutert.

Ein die Einfederungsdämpfung regelnder Steuerblock 47 im Ventilblock 39 besitzt ein Stromregelventil 49, dem ein Drosselventil 50 und ein Schutzventil 51 parallel geschaltet sind. Parallel zum Drosselventil 50 ist als Schutzventil ein Rückschlagventil 52 geschaltet, das bei der Einfederungsdämpfung in Strömungsrichtung geschlossen ist.

Der die Ausfederungsdämpfung regelnde Steuerblock 46 im Ventilblock 39 besitzt ein Stromregelventil 52, dem ein Rückschlagventil 53 parallel geschaltet ist, das in Durchflußrichtung bei der Ausfederung sperrt.

Wie des weiteren aus der Fig. 1 zu ersehen ist, sind die Drehwinkelgeber 26 und 27 über Leitungen 40, 41 und 43 an das Stromregelventil 52 im Steuerblock 46, der die Ausfederungsdämpfung regelt, angeschlossen und über die Leitungen 40, 41 und 42 an das Schutzventil 51 im die Einfederungsdämpfung regelnden Steuerblock 47 angeschlossen. Die Funktionsweise der beiden Steuerblöcke 46 und 47 ist so, daß bei der Einfederung bis zu einer bestimmten Durchflußmenge des Arbeitsmediums bzw. der Hydraulikflüssigkeit durch den die Einfederungsdämpfung regelnden Steuerblock 47 die geländeprofilabhängige Einfederungsdämpfung des die Ausfederung regelnden Steuerblocks 46 maßgebend für die Ruhigstellung (Lageregelung) des Fahrzeugaufbaus 32 ist. Oberhalb einer bestimmten Durchflußmenge durch den die Einfederungsdämpfung regelnden Steuerblock 47 wird ein bestimmtes Druckgefälle, das auf das gewünschte Maß einstell-

E 119

bar ist, zwischen den Arbeitsräumen 7, 8 und 11, 12, deren Volumen sich bei der Einfederung verringert, und den Arbeitsräumen 9, 10 und 13, 14, deren Volumen beim Ausfedern sich verringert, aufrechterhalten.

Ein Druckspeicher 17 verhindert Kavitationen und Blasenbildungen im Hydrauliksystem bzw. können mit Hilfe des Druckspeichers 17 Verluste des Arbeitsmediums im Hydrauliksystem kompensiert werden.

Zwischen die beiden gemeinsamen Leitungen 45 und 44 für die Arbeitsräume 9, 10 und 13, 14 sowie 7, 8 und 11, 12 ist eine Pumpe 48 geschaltet, die zusätzlich zur Änderung der Bodenfreiheit bzw. der einseitigen Absenkung oder Anhebung des Fahrzeugaufbaus dienen soll. Zur Verringerung der Bodenfreiheit wird durch die Pumpe 48 das Volumen der Arbeitsräume 9, 10 bzw. 13, 14 erhöht, wobei Arbeitsmedium aus den Arbeitsräumen 7, 8 und 11, 12 in die Arbeitsräume 9, 10 und 13, 14 durch die Pumpe 48 gefördert wird. Zur Vergrößerung der Bodenfreiheit des Fahrzeugaufbaus transportiert die Pumpe 48 Arbeitsmedium aus den Arbeitsräumen 9, 10 und 13, 14 in die Arbeitsräume 7, 8 und 11, 12, so daß deren Volumina vergrößert werden.

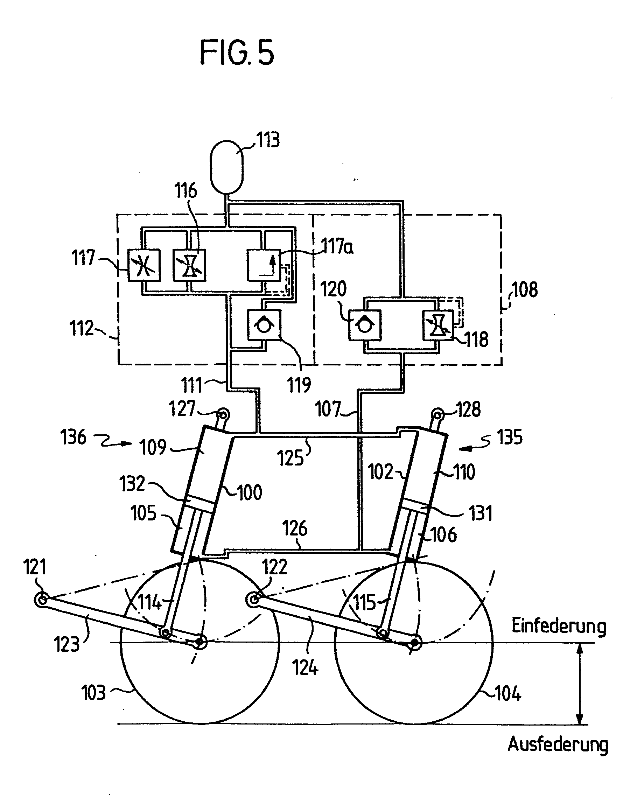

Beim Ausführungsbeispiel der Fig. 5 sind zwei Laufräder 103 und 104 eines Kettenlaufwerks dargestellt. Diese Laufräder 103 und 104 befinden sich in einer der vier Ecken des Laufwerkes. Mit Hilfe von verschwenkbaren Drehstäben 123, 124 sind die beiden Laufräder 103 und 104 an den nicht näher dargestellten Fahrzeugaufbau, z.B. einer Wanne, über Anlenkstellen 121 und 122 angelenkt. Die Abstützung der Wanne erfolgt über Kolbenstangenhydraulikzylinder 135 und 136, deren Kolbenstangen 114 und 115 an den Drehstäben 123 und 124 angelenkt sind. Zylindergehäuse 100 und 102 sind an

E 119

Anlenkstellen 127 und 128 am Fahrzeugaufbau schwenkbar befestigt.

Die hydraulische Koppelung der beiden Hydraulikzylinder 135 und 136 erfolgt über Verbindungsleitungen 125 und 126, wobei über die Verbindungsleitung 125 die kolbenseitigen Zylinderräume 109 und 110 und über die Verbindungsleitung 126 die stangenseitigen Ringräume 105 und 106 hydraulisch miteinander verbunden sind. Beim dargestellten Ausführungsbeispiel sind zwei Kolbenstangenhydraulikzylinder 135 und 136, die den beiden Laufrädern 103 und 104 zugeordnet sind, miteinander hydraulisch gekoppelt. Es ist jedoch auch möglich, drei Zylinder und die zugeordneten Laufräder oder mehr miteinander hydraulisch zu koppeln.

Die durch die Verbindungsleitung 125 miteinander verbundenen kolbenseitigen Zylinderräume 109 und 110 sind über eine gemeinsame Leitung 111 und über einen Steuerblock 112, durch den die Einfederungsdämpfung geregelt wird, mit einem Hochdruckspeicher 113 verbunden.

Die durch die Verbindungsleitung 126 miteinander verbundenen stangenseitigen Ringräume 105 und 106 sind mittels einer gemeinsamen Leitung 107 über einen die Ausfederungsdämpfung regelnden Steuerblock 108 mit dem Hochdruckspeicher 113 verbunden.

Der die Einfederungsdämpfung regelnde Steuerblock 112 besitzt ein Stromregelventil 116, dem ein Drosselventil 117 und ein Schutzventil 117a parallel geschaltet sind. Parallel zum Drosselventil 117 ist als Schutzventil ein Rückschlagventil 119 parallel geschaltet, das bei der Einfederungsdämpfung in Strömungsrichtung geschlossen ist.

E 119

Der die Ausfederungsdämpfung regelnde Steuerblock 108 besitzt ein Stromregelventil 118, dem ein Rückschlagventil 120 parallel geschaltet ist, das in Durchflußrichtung bei der Ausfederung sperrt.

Das Stromregelventil 116 besitzt die Eigenschaft, daß ab einem bestimmten voreinstellbaren Wert des Druckflußstroms am Ventil unabhängig vom Druckabfall der Durchflußstrom konstant bleibt. Beim Drosselventil 117 ist der Durchflußstrom abhängig von der Differenz der Drücke vor und nach dem Drosselquerschnitt. Durch das Zusammenwirken des Stromregelventils 116 und des Drosselventils 117 läßt sich ein Übergang von einer ungedämpften zu einer extrem gedämpften Einfederung (hohe Arbeitsaufnahme) stetig erzielen.

Das Stromregelventil 118 im Steuerblock 108 für die Ausfederungsdämpfung arbeitet so, daß dessen Durchflußmenge reziprok zum Speicherdruck gesteuert ist.

E 119

- 1 -

Patentansprüche:

1. Stabilisierungsanordnung für einen von einem Laufwerk getragenen Fahrzeugaufbau, insbesondere für einen von einem Kettenlaufwerk getragenen Aufbau eines Kettenfahrzeuges mit den Laufrädern (15, 16; 103, 104) des Laufwerks zugeordneten stoßdämpfenden Mitteln (1, 2; 135, 136), über die der Fahrzeugaufbau auf den Laufrädern (15, 16; 103, 104) des Laufwerks abgestützt ist, dadurch gekennzeichnet, daß

- im Bereich der Ecken der Fahrzeugaufbau (32) über eine doppelt wirkende Hydraulikeinrichtung (1, 2; 135, 136), die in einem geschlossenen Gehäuse (3, 4; 100, 102) durch ein im Gehäuseinnern in Abhängigkeit von der Laufräderbewegung beim Ein- und Ausfedern verstellbares Stellglied (5, 6, 26 bzw. 27; 114, 115) voneinander getrennte, mit Arbeitsmedium gefüllte Arbeitsräume (7, 8, 11, 12 und 9, 10, 13, 14; 109, 110 und 105, 106) aufweist, auf den jeweils zugeordneten Laufrädern (15, 16; 103 104) abgestützt ist,

- sowohl die bei der Ausfederung volumenmäßig sich verringernden Arbeitsräume (9, 10 und 13, 14; 105, 106) wenigstens zweier Hydraulikeinrichtungen (1, 2; 135, 136) über einen die Ausfederungsdämpfung regelnden Steuerblock (46; 108)

E 119 - N/Li

- als auch die bei der Einfederung volumenmäßig sich verringernden Arbeitsräume (7, 8 und 11, 12; 109, 110) wenigstens zweier Hydraulikeinrichtungen (1, 2; 135, 136) über einen die Einfederungsdämpfung regelnden Steuerblock (47; 112)

- angeschlossen sind und ein geschlossenes Hydrauliksystem bilden,

- wobei bei der Einfederung bis zu einer bestimmten Durchflußmenge an Arbeitsmedium durch den die Einfederungsdämpfung regelnden Steuerblock (47; 112) die geländeprofilabhängige Einfederungsdämpfung des die Ausfederung regelnden Steuerblocks (46; 108) maßgebend für die Ruhigstellung (Lageregelung) des Fahrzeugaufbaus (32) ist und oberhalb einer bestimmten Durchflußmenge durch den die Einfederungsdämpfung regelnden Steuerblock (47; 112) ein Druckgefälle zwischen den Arbeitsräumen (7, 8 und 11, 12; 109, 110), deren Volumen sich bei der Einfederung verringert. und den Arbeitsräumen (9, 10 und 13, 16; 105, 106), deren Volumen beim Ausfedern sich verringert, aufrecht erhalten bleibt.

2. Stabilisierungsanordnung nach Anspruch 1, dadurch gekennzeichnet,
daß die Hydraulikeinrichtung (1 bzw. 2) einen Drehflügel (5 bzw. 6) und Drehwinkelgeber (26 bzw. 27) als Stellglied aufweist, die in einem Drehflügelzylinder im Gehäuse (3 bzw. 4) angeordnet ist.

3. Stabilisierungsanordnung nach Anspruch 1 oder 2, dadurch gekennzeichnet,
daß der Drehflügelzylinder in zwei Drehflügelzylinderhälften (18, 19 bzw. 20, 21) aufgeteilt ist und jeweils ein Flügel (22, 23 bzw. 24, 25) eines zweiflügeligen Drehflügels (5 bzw. 6) jede Drehflügelzylinderhälfte (18, 19 bzw. 20, 21) in zwei Arbeitsraumhälften (7, 9 und 8, 10

E 119

sowie 11, 14 und 13, 12) unterteilt, von denen die ein Arbeitsraumhälfte (9 und 10 bzw. 13 und 14) ihr Volumen bei einer Ausfederung verringert und die andere Arbeitsraumhälfte (7 und 8 bzw. 11 und 12) ihr Volumen bei einer Einfederung verringert.

4.    Stabilisierungsanordnung nach einem der Ansprüche 1 bis 3, dadurch gekennzeichnet,

daß die beiden in den Drehflügelzylinderhälften (18, 19 bzw. 20, 21) vorhandenen Arbeitsraumhälften (9, 10 und 13, 14), deren Volumen bei einer Ausfederung sich verringert, miteinander verbunden sind und die beiden in den Drehflügelzylinderhälften (18, 19 bzw. 20, 21) vorhandenen Arbeitsraumhälften (7, 8 und 11, 12), deren Volumen bei einer Einfederung sich verringert, ebenfalls miteinander verbunden sind.

5.    Stabilisierungsanordnung nach einem der Ansprüche 1 bis 4, dadurch gekennzeichnet,

daß der Drehwinkelgeber (26 bzw. 27) ein von der Winkelstellung des Drehflügels (5 bzw. 6) abhängiges Signal an die die Ausfederungs- und Einfederungsdämpfung regelnden Steuerblöcke (46, 47) abgibt.

6.    Stabilisierungsanordnung nach einem der Ansprüche 1 bis 5, dadurch gekennzeichnet,

daß die Strömung des Arbeitsmediums im Drehflügelzylinder beim Verstellen des Drehflügels (5 bzw. 6) drehwinkelabhängig gedrosselt ist.

7.    Stabilisierungsanordnung nach Anspruch 6, dadurch gekennzeichnet,

daß zur drehwinkelabhängigen Drosselung beim Ein- und/oder Ausfedern zwischen dem Drehflügel (5 bzw. 6) und dem Mantel des Drehflügelzylinders ein mit dem Drehwinkel des Drehflügels (5 bzw. 6) veränderlicher radialer Spalt vorgesehen ist.

E 119

8. Stabilisierungsanordnung nach Anspruch 7, dadurch gekennzeichnet,

daß der radiale Spalt gebildet ist durch einen unrunden Mantel des Drehflügelzylinders.

9. Stabilisierungsanordnung nach Anspruch 6, dadurch gekennzeichnet,

daß zur drehwinkelabhängigen Drosselung beim Ein- und/oder Ausfedern ein mit dem Drehwinkel des Drehflügels (5 bzw. 6) veränderlicher axialer Spalt zwischen dem Drehflügel (5 bzw. 6) und dem Mantel des Drehflügelzylinders vorgesehen ist.

10. Stabilisierungsanordnung nach Anspruch 9, dadurch gekennzeichnet,

daß der veränderliche axiale Spalt gebildet ist durch unebene Stirnflächen im Drehflügelzylinder.

11. Stabilisierungsanordnung nach Anspruch 6, dadurch gekennzeichnet,

daß zur drehwinkelabhängigen Drosselung beim Ein- und/oder Ausfedern in den Stirnflächen oder Mantelflächen des Drehflügelzylinders Vertiefungen (28, 29, 30) mit über dem Drehwinkel des Drehflügels (5 bzw. 6) veränderlichem Querschnitt vorgesehen sind.

12. Stabilisierungsanordnung nach einem der Ansprüche 1 bis 11, dadurch gekennzeichnet,

daß für eine drehrichtungsabhängige Drosselwirkung zwischen dem Drehflügel (5 bzw. 6) und dem Mantel des Drehflügelzylinders ein Drosselspalt (31) gebildet ist, der entweder in Ein- oder Ausfederungsrichtung einen höheren Strömungswiderstand der Hydraulikflüssigkeit entgegensetzt als in Gegenrichtung.

E 119

13.   Stabilisierungsanordnung nach einem der Ansprüche 1 bis 12, dadurch gekennzeichnet,

daß die Einfederungsdämpfung des Steuerblocks (47) einstellbar ist.

14.   Stabilisierungsanordnung nach einem der Ansprüche 1 bis 13, dadurch gekennzeichnet, daß zwischen die Arbeitsräume (9, 10 bzw. 13, 14), welche bei der Ausfederung ihr Volumen verringern, und die Arbeitsräume (7, 8 und 11, 12), welche bei der Einfederung ihr Volumen verringern, eine Pumpe (48) geschaltet ist.

15.   Stabilisierungsanordnung nach einem der Ansprüche 1 bis 13, dadurch gekennzeichnet,

daß die Arbeitsräume (9, 10 bzw. 13, 14 und 7, 8 bzw. 11, 12) über die Steuerblöcke (46 und 47) an einen Druckspeicher (17) angeschlossen sind.

16.   Stabilisierungsanordnung nach Anspruch 1, dadurch gekennzeichnet, daß

- die Hydraulikeinrichtung als Kolbenstangenhydraulikzylinder (135, 136) ausgebildet ist,

- sowohl die auf der Stangenseite um Kolbenstangen (114, 115) gebildeten Ringräume (105, 106) wenigstens zweier Kolbenstangenhydraulikzylinder (135, 136) mittels einer gemeinsamen Leitung (107) über den die Ausfederungsdämpfung regelnden hydraulischen Steuerblock (108)

- als auch die auf der Kolbenseite gebildeten Zylinderräume (109, 110) wenigstens der beiden Kolbenstangenhydraulikzylinder (135, 136) mittels einer gemeinsamen Leitung (111) über einen die Einfederungsdämpfung regelnden Steuerblock (112)

- an einen gemeinsamen Hochdruckspeicher (113), dessen Aufnahmevolumen mindestens den Volumina der eingefahrenen Kolbenstangen (114, 115) der angeschlossenen Kolbenstangenhydraulikzylinder (135,

E 119

136) entspricht, angeschlossen sind,

- wobei bei der Einfederung bis zu einer bestimmten Durchflußmenge an Hydraulikflüssigkeit durch den die Einfederungsdämpfung regelnden Steuerblock (112) die geländeprofilabhängige Einfederungsdämpfung des die Ausfederung regelnden Steuerblockes (108) maßgebend für die Ruhigstellung (Lageregelung) des Fahrzeugaufbaus ist und oberhalb einer bestimmten Durchflußmenge durch den die Einfederungsdämpfung regelnden Steuerblock ein Druckgefälle zwischen den kolbenseitigen Zylinderräumen (109, 110) und dem Hochdruckspeicher (113) aufrechterhalten bleibt.

17. Stabilisierungsanordnung nach Anspruch 16, dadurch gekennzeichnet,
daß jede einem der Kolbenstangenhydraulikzylinder (135, 136) zugeordnete Laufrolle (103. 104) an einen um eine Anlenkstelle (121, 122) am Fahrzeugaufbau verschwenkbaren Drehstab (123, 124) befestigt ist, an welchem die Kolbenstange (114, 115) des Kolbenstangenhydraulikzylinders (135, 136) angelenkt ist, dessen Zylindergehäuse (100, 102) am Fahrzeugaufbau schwenkbar angelenkt ist.

18. Stabilisierungsanordnung nach einem der Ansprüche 1 bis 17, dadurch gekennzeichnet,
daß die Arbeitsräume (7, 8 und 11, 12; 109, 110), deren Volumen bei der Einfederung sich verringert, im die Einfederungsdämpfung regelnden Steuerblock (47; 112) an ein Stromregelventil (49; 116), dem ein Drosselventil (50; 117) und ein Schutzventil (51; 117a) parallel geschaltet sind, angeschlossen ist.

19. Stabilisierungsanordnung nach einem der Ansprüche 1 bis 18, dadurch gekennzeichnet,
daß die Arbeitsräume (9, 10 und 13, 14; 105, 106) im die Ausfederungsdämpfung regelnden Steuerblock (46; 108) an ein Stromregelventil (52;

E 119

119), dessen Durchflußmenge reziprok zum im geschlossenen Hydrauliksystem herrschenden Druck gesteuert ist, angeschlossen sind.

20. Stabilisierungsanordnung nach Anspruch 18, dadurch gekennzeichnet,
daß parallel zum Drosselventil (50; 117) im die Einfederungsdämpfung regelnden Steuerblock (47; 112) ein in Durchflußrichtung bei der Einfederung sperrendes Rückschlagventil (52; 119) geschaltet ist.

21. Stabilisierungsanordnung nach Anspruch 19, dadurch gekennzeichnet,
daß parallel zum Stromregelventil (52; 119) im die Ausfederungsdämpfung regelnden Steuerblock (46; 108) ein in Durchflußrichtung bei der Ausfederung sperrendes Rückschlagventil (53; 120) geschaltet ist.

22. Stabilisierungsanordnung nach einem der Ansprüche 1 bis 21, dadurch gekennzeichnet,
daß die Steuerblöcke (46, 47; 108, 112) über eine gut wärmeleitende Kontaktfläche mit dem Fahrzeugaufbau verbunden sind.

23. Stabilisierungsanordnung nach einem der Ansprüche 1 bis 22, dadurch gekennzeichnet,
daß die in den Ecken des Fahrzeugaufbaus vorhandenen hydraulischen Ein- und Ausfederungsdämpfungseinrichtungen nur über die dynamische Wannenbewegung mechanisch miteinander gekoppelt sind.

E 119

FIG.1

# FIG. 2A

3 (4)

28

5 (6)

# FIG. 2B

3 (4)

28

29

5 (6)

28

# FIG. 3

3 (4)

30

5 (6)

33 (34)

FIG. 4A

FIG. 4 B

FIG.5

## EUROPÄISCHER RECHERCHENBERICHT

**Europäisches Patentamt**

Nummer der Anmeldung

EP 81 10 4082.3

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 222 239 (P. DESORBAY et al.) <br> * Seite 3, Zeile 2 bis Seite 4, Zeile 15; Fig. 4 * <br><br>-- | 1,16, 17 |
| | US - A - 3 352 565 (R.K. REYNOLDS) <br> * Spalte 3, Zeilen 36 bis 57; Spalte 4, Zeilen 3 bis 29; Fig. 1,2,19 * <br><br>-- | 1-4 |
| | DE - A1 - 2 457 042 (MESSIER) <br> * Ansprüche 1,2; Seite 5, Zeile 13 bis Seite 6, Zeile 20; Fig. * <br><br>-- | 3,12 |
| | DE - C - 222 175 (F. KLOSTERMANN & CO.) <br> * Ansprüche; Fig. * <br><br>-- | 6,8 |
| | DE - A - 1 809 697 (VOLKSWAGENWERK AG) <br> * Ansprüche; Fig. * <br><br>-- | 7,9,11 |
| | GB - A - 1 220 374 (AKTIEBOLAGET BOFORS) <br> * Anspruch 1; Seite 4, Zeilen 12 bis 33; Fig. 3 * <br><br>---- | 5 |

**KLASSIFIKATION DER ANMELDUNG (Int. Cl.³)**

B 62 D 55/10
B 60 G 17/08

**RECHERCHIERTE SACHGEBIETE (Int. Cl.³)**

B 60 G 17/00
B 60 G 19/00
B 62 D 55/00
F 16 F 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-01-1982 | PETTI |